# EUROPEAN PATENT APPLICATION

(11) **EP 4 092 301 A1**
(43) Date of publication of application: **23.11.2022**
(21) Application number: 21175417.1
(22) Date of filing: 21.05.2021
(51) Int. Cl.: F16L 11/18, F16L 55/18, B08B 9/045, E03F 9/00, F16C 1/04, F16D 3/207

(54) **FLEXIBLE SHAFT**

(71) Applicant: Picote Solutions Oy Ltd, 06450 Porvoo (FI)
(72) Inventor: Lokkinen, Mika, 10130 Tallinn (EE)
(74) Representative: Wilenius, Jami Juhani

(57) **Abstract**

A flexible shaft which comprises a plurality of metal sleeves (10) having a smaller end portion (13) and a larger end portion (11) at opposite ends of the metal sleeve (10). One of the end portions has a plurality of protrusions (20) whereas the other one has a plurality of apertures (30) capable of accommodating a part of each of the plurality of protrusions (20). The smaller end portion (13) of is partially inside the larger end portion (11) of the next metal sleeve (10) in the flexible shaft. Each metal sleeve (10) is movably connected to the next metal sleeve (10) using the protrusions (20) and apertures (30). The apertures (30) are notably larger than the protrusions (20) in lengthwise direction (23, 33) of the flexible shaft which allows two adjacent metal sleeves (10) to be in position where their rotation axes (40) are not parallel.

## Description

### FIELD OF THE INVENTION

The invention relates to flexible shafts.

### BACKGROUND AND PRIOR ART

Underground piping, for e.g. potable water, is difficult to clean and even more difficult to replace when their service life is reached. Most of these pipes are located below streets, buildings or other structures that can prevent excavation.

A typical setup is to have a manhole or an inspection well about every 200 metres in a potable water line. The insides of the pipes can be accessed from these inspection wells without excavation but the long distance between the inspection wells means that a device with a reach of at least 100 metres is required to fully access the insides of a pipeline. Typical pipes have diameters ranging from 150 mm to 400 mm.

Cured-in-place-pipelining (CIPP) methods could be used to rehabilitate existing pipes instead of excavation and replacement of the pipes. However, CIPP method requires a thorough cleaning of the existing pipes before a liner is installed. Also, in case something goes wrong in the CIPP installation, a device capable of removing a failed liner should be at hand or otherwise a very difficult ad-hoc excavation might be needed.

Devices with a motor unit and a flexible shaft with a tool for cleaning the pipes usually have a maximum reach of about 40 metres. The flexible shaft is typically a 3-layer wound steel cable having diameter of 6 to 12 mm. However, these systems have been designed to be used inside buildings and in pipes having diameters ranging from about 50 mm to 100 mm. The cable limits power of the motor to about 1 to 2 kW. A larger pipe would require much more power and a thicker cable to transmit the needed force. This would increase the mass of the shaft so high that it could not be operated anymore.

Robot cleaners travelling inside pipes have a longer reach but the robot cleaners are very ineffective. The robots carry a small hydraulic or pneumatic motor which rotates a tool inside the pipe using a supply of air or water. The lack of torque of these types of motors is typically compensated with very high rotation speeds.

Currently, there is no viable solution for the problem of underground pipes reaching the end of their service life.

### BRIEF DESCRIPTION OF THE INVENTION

The object of the invention is a device, which alleviates the problem of underground pipes reaching the end of their service life.

Object of the invention is achieved with a flexible shaft which has a relatively low mass compared to torque it can transmit between a motor and a tool. The flexible shaft comprises a plurality of metal sleeves having a smaller end portion and a larger end portion at opposite ends of the metal sleeve. One of the end portions has a plurality of protrusions whereas the other one has a plurality apertures or recesses capable of accommodating a part of each of the plurality of protrusions. The smaller end portion of is partially inside the larger end portion of the next metal sleeve in the flexible shaft. Each metal sleeve is movably connected to the next metal sleeve using the protrusions and apertures or recesses. The apertures or recesses are notably larger than the protrusions in lengthwise direction of the flexible shaft which allows two adjacent metal sleeves to be in position where their rotation axes are not parallel.

### BRIEF DESCRIPTION OF THE FIGURES

The invention is now described in more detail in connection with preferred embodiments, with reference to the accompanying drawings, in which:
Fig. 1 shows an isometric view of a metal sleeve of a flexible shaft according to an embodiment;
Fig. 2 illustrates a side view of a metal sleeve of a flexible shaft according to an embodiment;
Fig. 3 illustrates a cross-section B-B of the metal sleeve of Fig. 2;
Fig. 4 illustrates a cross-section A-A of the metal sleeve of Fig. 2;
Fig. 5 illustrates a cross-section C-C of the metal sleeve of Fig. 2;
Fig. 6 illustrates a side view of a flexible shaft according to an embodiment; and
Fig. 7 illustrates a cross-section D-D of the flexible shaft of Fig. 6;

### DETAILED DESCRIPTION OF THE INVENTION

A flexible shaft of the present disclosure comprises a plurality of metal sleeves 10 in a line, where the metal sleeves are movable connected to adjacent metal sleeves forming a long flexible shaft. The movable connection between adjacent metal sleeves prevents any significant rotational movement between the adjacent metal sleeves but allows two adjacent metal sleeves to move between a position where their rotation axes 40 are parallel and a position where their rotation axes are non-parallel. In the latter position, an angle between the rotation axes of the two adjacent metal sleeves can be for example 5 to 20 degrees or 10 to 15 degrees. A 90 degree bend in the flexible shaft may thus require 5 to 18 metal sleeves. The movable connection between adjacent metal sleeves can prevent rotational movement of e.g. more than 1 degree or more than 5 degrees between the adjacent metal sleeves. The flexible shaft comprises at least one hundred metal sleeves, and preferably at least one thousand metal sleeves.

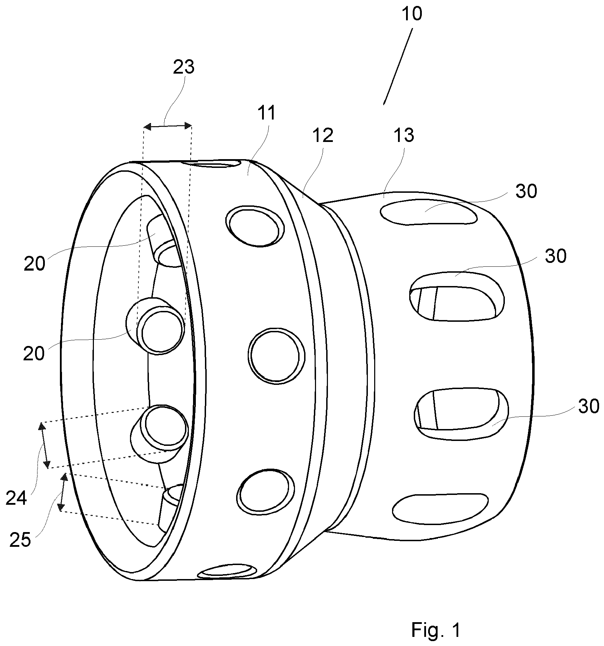

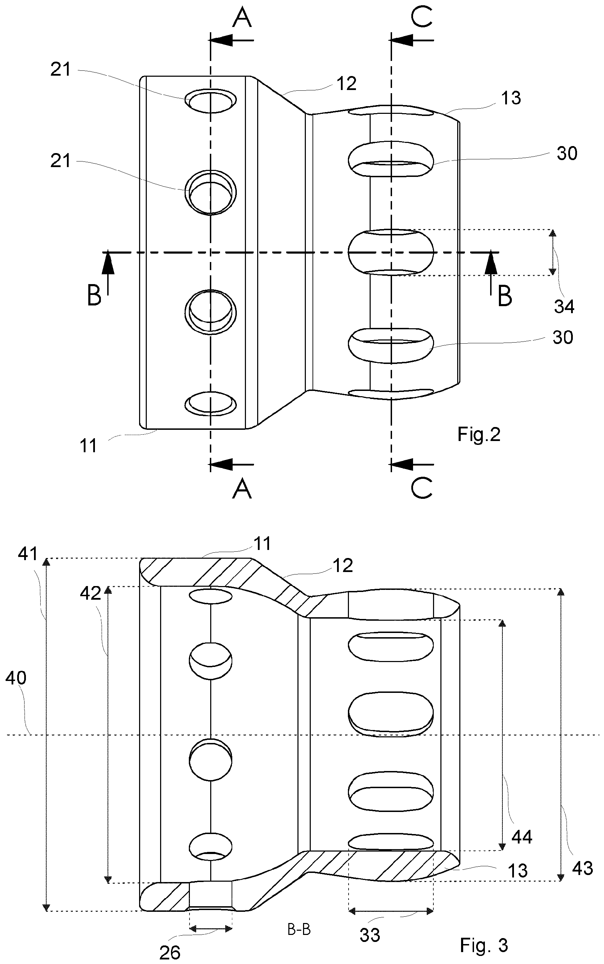

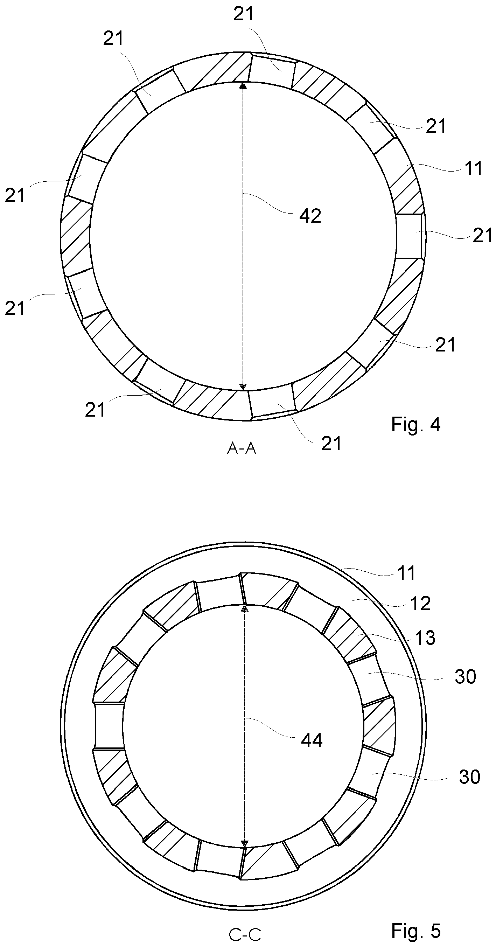

Figure 1 shows a metal sleeve 10 having a plurality of protrusions 20. Figures 2 to 5 show different views to a similar metal sleeve 10 but without the protrusions.

A flexible shaft according to an embodiment of the invention comprises a plurality of metal sleeves 10 shown in Figure 1. The metal sleeves have two end portions 11, 13 at opposite ends of the metal sleeve and a rotation axis 40 through the two end portions 11, 13. The two end portions have different outside diameters 41, 43 and there can be a tapered section 12 connecting the two end portions. One end portion 13 of the two end portions has an outside diameter 43 smaller than an inside diameter 42 of the other end portion 11. In Figures 1 to 3, the right-hand side end portion 13 has a smaller inner diameter 44 and outer diameter 43 than the left-hand side end portion 11.

One end portion of the two end portions has a plurality of protrusions having a length 23 in a direction parallel to the rotation axis 40. In Figures 1 to 3, this would be the left-hand side end portion 11. In an embodiment, the end portion 11 having the larger inside diameter 42 is the end portion having the plurality of protrusions 20 and thus the plurality of protrusions are on the inner surface of the end portion 11. In an embodiment, the end portion 13 having the smaller inside diameter 44 is the end portion having the plurality of protrusions 20 and thus, in this case, the plurality of protrusions are on the outer surface of the end portion 13.

The other end portion 13 (right-hand side in Figures 1 to 3) has a plurality of apertures 30 or recesses having a length 33 in the direction parallel to the rotation axis 40. Figures 1 to 3 all show embodiments where the right-hand side end portion 13 has apertures 30 but also recesses on outer surface of the end portion 13 could be used. The length 33 of the apertures 30 or recesses compared to the length 23 of the protrusions 20 is a key factor in flexibility of the flexible shaft. In the flexible shaft of the present disclosure, the protrusions 21 of a metal sleeve 10 are at least partially inside the apertures 30 or recesses of a subsequent metal sleeve 10 of the flexible shaft. The elongated apertures 30 or recesses allow the protrusions 20 to move or slide inside the apertures 30 or recesses and thereby rotation axes 40 of subsequent metal sleeves can be non-parallel. In an embodiment, the end portion 13 having the smaller inside diameter 44 is the end portion having the plurality of apertures 30 or recesses and thus, in case of recesses, the plurality of recesses would be on the outer surface of the end portion 13. In an embodiment, the end portion 11 having the larger inside diameter 42 is the end portion having the plurality of apertures or recesses 30 and thus, in case of recesses, the plurality of recesses would be on the inner surface of the end portion 11. The apertures 30 are preferably symmetrical whether seen from the inside or the outside, so the apertures would be similar regardless of on which end portion they are located in.

The length 33 of the apertures 30 or recesses is at least 125 % of the length 23 of the protrusions 20 but preferably at least 150 % of the length 23 of the protrusions 20. The length 33 of the apertures 30 or recesses is at most 250 % of the length 23 of the protrusions 20 but preferably at most 200 % of the length 23 of the protrusions 20.

The protrusions 20 and the apertures 30 or recesses have a width in circumferential direction about the rotation axis 40. In an embodiment the width 24 of the protrusions is smaller than the width 34 of said apertures or recesses. The difference in the widths 24, 34 is preferably a small clearance between the protrusions 20 and the inner walls of the apertures 30 or recesses. The width 24 of the protrusions can be for example at most 5 % or at most 1 mm smaller than the width 34 of the apertures or recesses. In an embodiment, the width of the protrusions is less than 100 % but more than 95 % of the width of the apertures or recesses. Preferably, the width 24 of the protrusions is at most 1 % or at most 0,1 mm smaller than the width 34 of the apertures or recesses.

The protrusions 20 also have a depth 25 which is the shortest distance measured from the protruding end of the protrusion to the closest surface of the end portion from which the protrusion protrudes from. The depth 25 must be larger than the difference between the smaller outside diameter and the larger inside diameter to prevent two metal sleeves from detaching from each other.

In an embodiment of the present disclosure, the protrusions 20 of the metal sleeves 10 are rods or tubes having a circular cross-section in a radial direction of the metal sleeve and said rods or tubes extend in the radial direction of the metal sleeve. In an embodiment the rods or tubes are welded or soldered into circular through-holes 21 in the metal sleeves. The circular through-holes have a diameter 26 slightly larger, for example by at most 1 % or by at most 0,1 mm, than diameter of the rods or tubes. The welding or soldering of the rods or tubes is performed when the flexible shaft is assembled. Two adjacent metal sleeves are placed partially inside each other such that the circular through-holes 21 of one end portion 11 align with apertures 30 or recesses of the opposite end portion 13 of the adjacent metal sleeve. Then rods or tubes are inserted into the circular through-holes 21 such that said rods or tubes extend into said apertures 30 or recesses. Preferably, the end portion 11 having the circular through-holes 21 has a larger inner diameter 42 than the outer diameter 43 of the end portion 13 having the apertures 30 or recesses. The opposite is also possible but it makes the assembly process more difficult.

Finally, the rods or tubes are welded or soldered into the circular through-holes and thereby the two adjacent metal sleeves are now movably connected in a way which prevents any significant rotational movement between the adjacent metal sleeves but allows the two adjacent metal sleeves to move between a position where their rotation axes 40 are parallel and a position where their rotation axes are non-parallel. Torque between two adjacent metal sleeves is transmitted via the protrusions, such as rods or tubes. Therefore, the protrusions must be sturdy enough or there must be a sufficient number of protrusions in order to withstand high torque. Preferably the metal sleeves comprise at least six protrusions and at least six apertures or recesses.

In an embodiment, the protrusions 20 of the metal sleeve are formed from the metal sleeve during the assembly process. A cut is made to the metal sleeve in positions where the circular through-holes 21 are shown in Figures 2 and 3. Once the cuts is aligned with apertures or recesses of another metal sleeve, a part inside each of the cuts is pushed into the apertures of recesses of the other metal sleeve and the two metal sleeves are now movably connected.

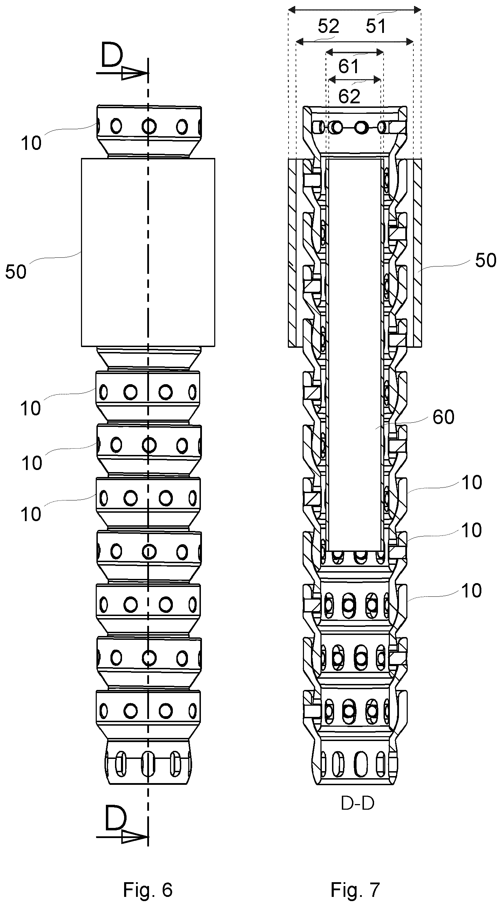

An embodiment of the flexible shaft of the present disclosure is illustrated in Figure 6 and section D-D of that in Figure 7. In an embodiment, the flexible shaft further comprises an inner duct 60 extending inside said plurality of metal sleeves 10 on at least 90 % of the length of the flexible shaft. The inner duct 60 shown in Figure 7 is substantially shorter for illustrative purposes only. The inner duct 60 has an outside diameter 61 that is smaller than the inside diameters 42, 44 of the two end portions 11, 13 of the metal sleeves 10. The inner duct 60 has also an internal diameter 62 and the insides of the inner duct 60 can be used to deliver fluids inside the flexible shaft. Alternatively, the inner duct 60 can be used as a protective cover for tubes or electrical wiring which must not be damaged by rotation of the metal sleeves 10. For example, a camera can be inserted through the inner duct such that a cable or cables of the camera are inside the inner duct so that a user can monitor the far end of the flexible shaft and a tool attached to the flexible shaft. The inner duct 60 is preferably a flexible plastic tube made e.g. polyamide, such as PA12, which is known to be a good general-use plastic with high tensile strength and good impact resistance. Preferably, the metal sleeves are rotatable with respect to the inner duct 60, i.e. the metal sleeves can be rotated about the inner duct without the inner duct rotating.

In an embodiment, the flexible shaft further comprises an outer duct 50 extending outside said plurality of metal sleeves on at least 90 % of the length of the flexible shaft. The outer duct 50 shown in Figures 6 and 7 is substantially shorter for illustrative purposes only. The outer duct has 50 an inside diameter 52 larger than the outside diameters 41, 43 of the two end portions 11, 13 of the metal sleeves 10. The outer duct 50 is preferably the outermost part of the flexible shaft in radial direction from the rotation axis 40 and the outside diameter 51 of the outer duct 50 is the largest diameter of the flexible shaft. The outer duct 50 is preferably a flexible plastic tube made e.g. polyamide, such as PA12, which is known to be a good general-use plastic with high tensile strength and good impact resistance. Preferably, the metal sleeves are rotatable with respect to the outer duct 50, i.e. the metal sleeves can be rotated within the outer duct without the outer duct rotating. The outer duct protects the inner surface of a pipe where the flexible shaft is operated. Without the outer duct, an uneven surface of the metal sleeves might scratch or otherwise damage the inner surface of the pipe.

In an embodiment, the flexible shaft comprises a plurality of metal sleeves 10 in a line, each metal sleeve being movably connected to at least one other metal sleeve, wherein the inner duct 60 extends through at least 90 % of the metal sleeves and an outer duct 50 extends outside the metal sleeves covering at least 90 % of the metal sleeves. The metal sleeves between the inner duct and the outer duct are rotatable with respect to both the inner duct and the outer duct. A space between the inner duct and the outer duct can be constantly flushed with water or some other fluid to flush out any debris from said space and to cool down the metal sleeves and to reduce friction within the flexible shaft itself when the metal sleeves are being rotated.

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. A flexible shaft comprising a plurality of metal sleeves (10) having two end portions (11, 13) at opposite ends of the metal sleeve (10) and a rotation axis (40) through said two end portions, wherein one end portion (13) of the two end portions has an outside diameter (43) smaller than an inside diameter (42) of the other end portion (11), **characterized in that** one end portion (11) of the two end portions has a plurality of protrusions (20) having a length (23) in a direction parallel to the rotation axis (40) whereas the other end portion (13) has a plurality apertures (30) or recesses having a length (33) in the direction parallel to the rotation axis (40), wherein the length (33) of said apertures (30) or recesses is at least 150 % of the length (23) of said protrusions (20), where said protrusions (20) of a metal sleeve are at least partially inside said apertures (30) or recesses of a subsequent metal sleeve of the flexible shaft.

2. The flexible shaft of claim 1, wherein said protrusions (20) and said apertures (30) or recesses have a width (24, 34) in circumferential direction about the rotation axis (40), where the width (24) of said protrusions (20) is smaller than the width (34) of said apertures (30) or recesses.

3. The flexible shaft of claim 2, wherein the width (24) of said protrusions (20) is less than 100 % but more than 95 % of the width (34) of said apertures (30) or recesses.

4. The flexible shaft of any one of claim 1 to 3, wherein said protrusions (20) are rods or tubes having a circular cross-section in a radial direction and said rods or tubes extend in the radial direction (25).

5. The flexible shaft of claim 4, wherein said protrusions (20) are tubes or rods welded or soldered into circular through-holes (21) in the metal sleeves (10).

6. The flexible shaft of any one of claim 1 to 5, wherein the length (33) of said apertures (30) or recesses is at most 250 % of the length (23) of said protrusions (20).

7. The flexible shaft of any one of claim 1 to 6, wherein said metal sleeves (10) comprise at least six protrusions (20) and at least six apertures (30) or recesses.

8. The flexible shaft of any one of claim 1 to 7, wherein the flexible shaft comprises at least one hundred metal sleeves (10).

9. The flexible shaft of any one of claim 1 to 8, wherein the flexible shaft further comprises an inner duct (60) extending inside said plurality of metal sleeves (10) on at least 90 % of the length of the flexible shaft, said inner duct (60) having an outside diameter (61) smaller than the inside diameters (42, 44) of the two end portions (11, 13) of the metal sleeves (10).

10. The flexible shaft of claim 9, wherein said inner duct (60) is a flexible plastic tube.

11. The flexible shaft of any one of claim 1 to 10, wherein the flexible shaft further comprises an outer duct (50) extending outside said plurality of metal sleeves (10) on at least 90 % of the length of the flexible shaft, said outer duct (50) having an inside diameter (52) larger than the outside diameters (41, 43) of the two end portions (11, 13) of the metal sleeves (10).

12. The flexible shaft of claim 11, wherein said outer duct (50) is a flexible plastic tube.

13. The flexible shaft of any one of claims 1 to 8, wherein the flexible shaft further comprises an inner duct (60) extending inside said plurality of metal sleeves (10) on at least 90 % of the length of the flexible shaft, said inner duct (60) having an outside diameter (61) smaller than the inside diameters (42, 44) of the two end portions (11, 13) of the metal sleeves (10), wherein the flexible shaft also comprises an outer duct (50) extending outside said plurality of metal sleeves (10) on at least 90 % of the length of the flexible shaft, said outer duct (50) having an inside diameter (52) larger than the outside diameters (41, 43) of the two end portions (11, 13) of the metal sleeves (10), wherein said inner duct (60) and said outer duct (50) are flexible plastic tubes.

## Amended claims

### Amended claims in accordance with Rule 137(2) EPC.

1. A flexible shaft comprising a plurality of metal sleeves (10) having two end portions (11, 13) at opposite ends of the metal sleeve (10) and a rotation axis (40) through said two end portions, wherein one end portion (13) of the two end portions has an outside diameter (43) smaller than an inside diameter (42) of the other end portion (11), where one end portion (11) of the two end portions has a plurality of protrusions (20) having a length (23) in a direction parallel to the rotation axis (40) whereas the other end portion (13) has a plurality apertures (30) or recesses having a length (33) in the direction parallel to the rotation axis (40), wherein the length (33) of said apertures (30) or recesses is at least 150 % of the length (23) of said protrusions (20), where said protrusions (20) of a metal sleeve are at least partially inside said apertures (30) or recesses of a subsequent metal sleeve of the flexible shaft, **characterized in that** said protrusions (20) are rods or tubes welded or soldered into circular through-holes (21) in the metal sleeves (10), said rods or tubes having a circular cross-section in a radial direction and said rods or tubes extend in the radial direction (25).

2. The flexible shaft of claim 1, wherein said protrusions (20) and said apertures (30) or recesses have a width (24, 34) in circumferential direction about the rotation axis (40), where the width (24) of said protrusions (20) is smaller than the width (34) of said apertures (30) or recesses.

3. The flexible shaft of claim 2, wherein the width (24) of said protrusions (20) is less than 100 % but more than 95 % of the width (34) of said apertures (30) or recesses.

4. The flexible shaft of any one of claim 1 to 3, wherein the length (33) of said apertures (30) or recesses is at most 250 % of the length (23) of said protrusions (20).

5. The flexible shaft of any one of claim 1 to 4, wherein said metal sleeves (10) comprise at least six protrusions (20) and at least six apertures (30) or recesses.

6. The flexible shaft of any one of claim 1 to 5, wherein the flexible shaft comprises at least one hundred metal sleeves (10).

7. The flexible shaft of any one of claim 1 to 6, wherein the flexible shaft further comprises an inner duct (60) extending inside said plurality of metal sleeves (10) on at least 90 % of the length of the flexible shaft, said inner duct (60) having an outside diameter (61) smaller than the inside diameters (42, 44) of the two end portions (11, 13) of the metal sleeves (10).

8. The flexible shaft of claim 7, wherein said inner duct (60) is a flexible plastic tube.

9. The flexible shaft of any one of claim 1 to 8, wherein the flexible shaft further comprises an outer duct (50) extending outside said plurality of metal sleeves (10) on at least 90 % of the length of the flexible shaft, said outer duct (50) having an inside diameter (52) larger than the outside diameters (41, 43) of the two end portions (11, 13) of the metal sleeves (10).

10. The flexible shaft of claim 9, wherein said outer duct (50) is a flexible plastic tube.
